# EUROPÄISCHE PATENTSCHRIFT

(11) **EP 2 674 620 B1**
(45) Veröffentlichungstag und Bekanntmachung des Hinweises auf die Patenterteilung: **15.11.2017**
(21) Anmeldenummer: 13170869.5
(22) Anmeldetag: 06.06.2013
(51) Int. Cl.: F03D 13/20

(54) **Flanschteil für einen Turm einer Windkraftanalge**
Flange portion for a tower of a wind power system
Pièce de bride pour une tour d'une installation éolienne

(30) Priorität: 15.06.2012 DE 102012011770
(43) Veröffentlichungstag der Anmeldung: 18.12.2013
(73) Patentinhaber: Siegthalerfabrik GmbH, 57080 Siegen (DE)
(72) Erfinder: Wolf, Dietmar, 57234 Wilnsdorf (DE)
(74) Vertreter: Bendel, Christian

(56) Entgegenhaltungen:
- EP-A1- 2 192 245
- US-A1- 2008 041 009
- US-A1- 2010 117 353

## Beschreibung

Die Erfindung betrifft ein Flanschteil für einen Turm einer Windkraftanlage nach dem Oberbegriff des Anspruchs 1 sowie ein Verfahren zur Herstellung eines Flanschteils mit den Merkmalen des Anspruchs 11.

Aus der Praxis des Baus von Windkraftanlagen sind Türme bekannt, bei denen ringförmige Flanschteile an rohrförmige Abschnitte des Turms angeschweißt sind. Mittels der Flanschteile werden die einzelnen Abschnitte der Türme untereinander verbunden oder es erfolgt die Verbindung mit einer Turmbasis oder mit einem Turmkopf.

US 6,470,645 B1 beschreibt einen Turm für eine Windkraftanlage, bei dem ein längerer, rohrförmiger Abschnitt des Turms zunächst aus mehreren kurzen Rohrstücken durch Verschweißen zusammengebaut wird. Zuletzt wird an einem Ende ein Flanschring an diesen rohrförmigen Abschnitt angeschweißt, wobei der Flanschring als nahtfrei einstückiges Bauteil ausgebildet ist. Bei solchen Bauformen muss der Flanschring in vielen Fällen nach seiner Verbindung mit dem Turm aufwendig nachbearbeitet werden.

US 2008/0041009 beschreibt in Figur 1 einen zu der US 6,470,645 B1 ähnlichen Aufbau eines Turms aus Rohteilen, die jeweils aus mehreren ringförmigen Segmenten bestehen, wobei an den Enden der Rohrteile jeweils ein einstückiger Flanschring anschließt. Wie bei der Lehre der US 6,470,645 B1 wird dabei der nahtfrei einstückige Flanschring erst nach einem Verbinden der ringförmigen Segmente unmittelbar an dem Rohrteil angebracht.

US 2010/0117353 A1 beschreibt einen Flansch für einen Turm einer Windkraftanlage, bei dem ein Ringflansch an seinen radial äußeren Kanten umlaufend an die Innenwand einer Hülse angeschweißt ist. Zudem sind eine Vielzahl parallel zu einer Flanschachse ausgerichtete Knotenbleche einerseits mit dem Ringflansch und andererseits mit der Innenseite der Hülse verschweißt.

Es ist die Aufgabe der Erfindung, ein Flanschteil anzugeben, das eine einfache Montage einer Windkraftanlage ermöglicht.

Diese Aufgabe wird für ein eingangs genanntes Flanschteil erfindungsgemäß mit den kennzeichnenden Merkmalen des Anspruchs 1 gelöst.

Durch die stoffschlüssige Verbindung des Hülsenglieds mit dem Ringflansch kann eine einfache und dennoch stabile Ausführung eines Flanschteils bereitgestellt werden. Dabei kann eine Verbindung mit einem rohrförmigen Abschnitt des Turms über den endständigen Rand des Hülsenglieds so erfolgen, so dass der auf der anderen Seite des Hülsenglieds befindliche Ringflansch eine allenfalls geringe thermische Belastung beim Anschweißen des Flanschteils erfährt.

Allgemein wird unter einem Flanschteil im Sinne der Erfindung eine kompakte und im Unterschied zu einem montierten Turm oder Turmteil einfach transportable Einheit verstanden. Je nach Dimensionierung und Transportmöglichkeiten ist es im Sinne der Erfindung möglich, dass das Flanschteil erst an einem Aufstellort der Windkraftanlage mit dem rohrförmigen Abschnitt des Turmes verbunden wird.

Das Hülsenglied kann als einfacher zylindrischer Abschnitt ausgebildet sein, oder je nach Anforderungen Verstärkungen, Knotenbleche, eine randseitig abschließende Deckplatte oder Ähnliches umfassen.

Der Turm der Windkraftanlage kann auf beliebige Weise ausgebildet sein, zum Beispiel vollständig als Rohrturm, in Jacket-Bauweise, in Tripile-Bauweise oder auch in Tripod-Bauweise, wobei jeweils zumindest ein rohrförmiger Abschnitt zur Anbindung des Flanschteils vorliegt.

Das erfindungsgemäße Flanschteil kann besonders bevorzugt entweder als oberer Kopfflansch des Turms Verwendung finden oder auch als unterer Basisflansch.

Im Fall des Einsatzes als Kopfflansch kann die auf der ersten Seite festzulegende Struktur zum Beispiel eine Scheibe für eine Windrichtungsnachführung oder eine andere untere Struktur einer Gondel der Windkraftanlage sein. Die erste Seite des Flanschteils ist dabei nach oben orientiert.

Im Fall des Einsatzes als Basisflansch kann die auf der ersten Seite festzulegende Struktur zum Beispiel eine Turmbasis sein, wobei die erste Seite nach unten orientiert ist.

Es kann sich bei dem Basisflansch auch um einen an einem Turmfundament angeschweißten Flansch handeln, bei dem das Hülsenglied des erfindungsgemäßen Flanschteils entsprechend nach unten orientiert ist.

Die Ausnehmungen in dem Ringflansch können jede beliebige Form zur Festlegung der Struktur aufweisen. Bei einer einfachen Detailgestaltung kann es sich um durchgängige Schraubenlöcher handeln. Ein solches Schraubenloch kann je nach Anforderungen glattwandig sein, ein Innengewinde aufweisen oder auch als Langloch ausgebildet sein.

Die Erfindung ist besonders bevorzugt für große Offshore-Windkraftanlagen verwendbar. Solche Anlagen zeichnen sich durch groß dimensionierte Bauteile und hohe Wandstärken aus. Dies bringt wiederum große Wärmeeinträge bei Verschweißen des Flanschteils mit dem Turm mit sich. Wandstärken des Hülsenglieds können für Offshore-Anlagen mehr als 4 cm, teilweise mehr als 5 cm, betragen. Die Bauteile werden regelmäßig über die gesamte Wanddicke durchgeschweißt.

Unter einem Verschweißen im Sinne der Erfindung wird jede stoffschlüssige Verbindung durch ein geeignetes Schweißverfahren verstanden. Bevorzugt erfolgt eine in Umfangsrichtung durchgängige Verschweißung, die eine wind- und wasserdichte Verbindung zwischen Ringflansch und Hülsenglied sowie zwischen Hülsenglied und rohrförmigem Abschnitt bereitstellt. In der radialen Richtung werden ebenfalls sämtliche Schweißnähte als durchgängig ausgeführt.

Grundsätzlich können das Hülsenglied und der damit verschweißte Ringflansch aus verschiedenen Materialien bzw. verschiedenen Stählen bestehen, bevorzugt wird jedoch für beide Teile derselbe Stahl verwendet. Allgemein kann für einen erfindungsgemäßen Flansch jeder Stahl verwendet werden, der auch sonst im Bau von Windkraftanlagen üblich ist.

Bei einer bevorzugten Ausführungsform der Erfindung erfährt das Flanschteil nach einem Verschweißen des Hülsenglieds mit dem Ringflansch eine Temperaturbehandlung. Hierdurch kann die Festigkeit bzw. zulässige Belastbarkeit des Flanschteils weiter erhöht werden. Die Temperaturbehandlung umfasst bevorzugt ein Glühen des Flanschteils über einen definierten Zeitraum bei kontrollierter Temperatur, so dass ein spannungsreduzierter Zustand erreicht wird. Eine solche Nachbehandlung insbesondere nach einem Schweißvorgang wird auch als "spannungsarm glühen" bezeichnet.

Gemäß der Erfindung hat der Ringflansch an der zweiten Seite einen umlaufenden Kragen, wobei das Hülsenglied in Richtung der Achse nach dem Kragen angeordnet und mit dem Kragen verschweißt ist. Das Verschweißen mit einem vorragenden Kragen ist insbesondere bei dicken Wandstärken des Hülsenteils einfacher und effektiver. Zugleich wird beim Anschweißen des Hülsengliedes weniger Wärme bis in den mit Ausnehmungen versehenen Teil des Ringflansches geleitet.

In bevorzugter Weiterbildung ist dabei der Ringflansch mit dem Kragen nahtfrei einstückig ausgebildet. Hierdurch erfolgt die Krafteinleitung von einem hohlzylindrischen Wandabschnitt des fertig montierten Turmes in den Ringflansch über einen insbesondere nahtfreien Materialbereich am Ansatz des Kragens, so dass eine optimale Bruchfestigkeit gegeben ist. Der nahtfrei einstückig angrenzende Kragen kann insbesondere einen verdickten Übergangsbereich zum übrigen Ringflansch aufweisen. Dabei kann es sich zum Beispiel im Übergang zum Kragen um eine Auskehlung von definiertem Krümmungsradius handeln.

Bei einer möglichen Detailgestaltung ist dabei der Kragen durch formgebende, bevorzugt abtragende Bearbeitung aus dem Ringflansch ausgebildet.

Bei einer hierzu alternativen Detailgestaltung ist der Ringflansch als ringförmig gebogenes Profil ausgebildet, wobei der Kragen vor einem Biegevorgang an dem Profil ausgebildet ist. Ein solches Profilteil kann durch Strangpressen, Gießen, abtragende Bearbeitung, Schmieden oder auf sonstige Weise vorgeformt werden, wobei der Kragen zum Beispiel als vorragender flacher Abschnitt ausgebildet ist. Nachfolgend wird das Profilteil zu einem Ring gebogen, so dass der flache Abschnitt zu dem hülsenförmigen Kragen geformt wird.

In jedem Fall kann der Kragen zur Vereinfachung der Flanschherstellung und zur Materialeinsparung relativ kurz in der axialen Richtung ausgebildet sein. Besonders bevorzugt ist dabei eine axiale Höhe des Hülsenglieds größer als eine axiale Höhe des Kragens. Weiterhin bevorzugt beträgt die Höhe des Hülsenglieds zwischen dem 2-fachen und dem 15-fachen einer Höhe des Kragens. Bei einer vorgegebenen gegebenen axialen Länge des Flanschteils kann hierdurch zum einen ein ausreichend großer Ansatz zum Anschweißen des Hülsenglieds sichergestellt werden, und zum anderen ist die gesamte axiale Höhe des Flanschteils im Interesse von Transport und Handhabbarkeit begrenzt.

Allgemein vorteilhaft ist im Interesse von Transport und Handhabbarkeit vorgesehen, dass eine Höhe des Hülsenglieds in axialer Richtung nicht größer ist als ein Außendurchmesser des Ringflansches.

Bei einer bevorzugten Weiterbildung der Erfindung ist es vorgesehen, dass der Ringflansch auf der ersten Seite eine bearbeitete Oberfläche aufweist. Bevorzugt, aber nicht notwendig umfasst dies eine spanende Bearbeitung, zum Beispiel Drehen, Fräsen und/oder Schleifen. Eine solche Bearbeitung stellt eine hohe Maßhaltigkeit der Oberfläche der ersten Seite sicher. Die Bearbeitung umfasst insbesondere eine Endbearbeitung zum unmittelbaren Anbringen der Struktur an dem Flanschteil, nachdem dieses mit dem rohrförmigen Abschnitt des Turms verschweißt wurde. Hierdurch ist ein erheblicher Vorteil gegenüber vorbekannten Flanschen erzielt, bei denen aufgrund eines Verzugs beim Schweißvorgang regelmäßig ein Nachbearbeiten der ersten Seite nach einem Anschweißen des Flansches erfolgen muss.

Im Sinne der Erfindung erfolgt die Bearbeitung der Oberfläche auf der ersten Seite vorteilhaft nach dem stoffschlüssigen Verbinden des Hülsenglieds mit dem Ringflansch, und zudem vor einem Anschweißen des Flanschteils an den rohrförmigen Abschnitt des Turms.

Selbst wenn, zum Beispiel aufgrund sorgfältiger Prozesskontrolle bei der Vorfertigung der Flanschteils, keine Nachbearbeitung der Oberfläche der ersten Seite nach dem Anschweißen des Hülsenglieds erforderlich wird, so hat das erfindungsgemäße Flanschteil bevorzugt in jedem Fall eine maßhaltige, definierte Oberfläche auf der ersten Seite des Flanschringes. Hierdurch kann das Ziel erreicht werden, dass eine Nachbearbeitung des Ringflansches an dem fertig verschweißten Turm nicht mehr erforderlich ist.

Bei einer besonders bevorzugten Ausführungsform ist der Ringflansch als ringförmig gebogenes und an einer Nahtstelle stoßbündig verschweißtes Profilteil ausgebildet. Hierdurch ist eine besonders einfache Fertigung ermöglicht. Die Querschnittsform des Profilteils kann einen je nach Anforderungen geformten Querschnitt aufweisen. Bei einer einfachen Ausführungsform kann der Querschnitt im Wesentlichen rechteckig sein. Bei bevorzugten Ausführungsformen können auch weitere Ausformungen vorliegen, wie zum Beispiel vorragende Strukturen.

Bei einer hierzu alternativen Ausführungsform ist der Ringflansch als in Umfangsrichtung nahtfreies Bauteil ausgebildet. Ein solcher Ringflansch kann zum Beispiel durch Walzvorgänge und/oder Schmiedevorgänge aus einem ringförmigen Werkstück ausgeformt werden. Dabei kann zunächst eine Scheibe aus einem Rohling wie etwa einer Stahlbramme abgetrennt, nachfolgend gelocht und dann zu dem Ringflansch umgeformt werden.

Die Aufgabe der Erfindung wird zudem für ein Verfahren zur Herstellung eines erfindungsgemäßen Flanschteils für einen Turm einer Windkraftanlage gelöst, umfassend die Schritte:
a. Bereitstellen eines Ringflansches;
b. Anschweißen eines Hülsenglieds an den Ringflansch, wobei das Hülsenglied einen endständigen Rand zur Verschweißung mit einem rohrförmigen Abschnitt des Turms aufweist.

Durch das Verfahren wird ein erfindungsgemäßes Flanschteil nach einem der Ansprüche 1 bis 10 hergestellt.

Wie vorstehend für das erfindungsgemäße Flanschteil erläutert kann bei einer bevorzugten Ausführungsform des Verfahrens nach Schritt b. eine Temperaturbehandlung des Flanschteils erfolgen.

Alternativ oder ergänzend kann nach Schritt b. eine Bearbeitung einer Oberfläche des Ringflansches erfolgen. Bevorzugt kann es sich um eine spannende Bearbeitung handeln. Besonders bevorzugt erfolgt die Bearbeitung der Oberfläche nach einer Temperaturbehandlung.

Bei einem besonders bevorzugten Verfahren ist es vorgesehen, dass nach einem Anschweißen des Flanschteils an den rohrförmigen Abschnitt des Turms keine Nachbearbeitung des Ringflansches mehr erfolgt. Hierdurch wird am Ort einer Vormontage, insbesondere am Ort der Errichtung der Windkraftanlage, erheblicher Aufwand eingespart. Die Merkmale des erfindungsgemäßen Flanschteils ermöglichen ein solches Vorgehen, da ein Verzug des Ringflansches im Bereich einer Oberfläche der ersten Seite im Zuge der Montage kaum auftritt.

Die Erfindung betrifft zudem einen Turm für eine Windkraftanlage, der ein erfindungsgemäßes Flanschteil nach einem der Ansprüche 1 bis 11 umfasst. Erfindungsgemäß wird bei einem Bau des Turms das Flanschteil als eigenständiges und separat transportierbares Bauteil vorgefertigt. Dieses Bauteil wird im Zuge einer Herstellung des Turms mit dem rohrförmigen Abschnitt des Turms verschweißt. Besonders bevorzugt handelt es sich dabei um einen Kopfflansch und/oder einen Basisflansch des Turmes, da insbesondere diese Flansche bei herkömmlichen Bauweisen häufig bei der Herstellung der Bauteile oder im Zuge der Errichtung des Turmes nachbearbeitet werden müssen.

Weitere Vorteile und Merkmale der Erfindung ergeben sich aus dem nachfolgend beschriebenen Ausführungsbeispiel sowie aus den abhängigen Ansprüchen.

Nachfolgend wird ein bevorzugtes Ausführungsbeispiel der Erfindung beschrieben und anhand der anliegenden Zeichnungen näher erläutert.
- Fig. 1: zeigt eine schematische Schnittansicht eines erfindungsgemäßen Flanschteils.
- Fig. 2: zeigt einen Teil einer Windkraftanlage mit dem Flanschteil aus Fig. 1.

Das erfindungsgemäße Flanschteil 1 ist kreisförmig um eine zentrale Achse A orientiert, die im montierten Zustand einer Mittelsenkrechten eines Turms einer Windkraftanlage entspricht.

Das Flanschteil 1 umfasst einen Ringflansch 2 mit einer ersten, oberen Seite 2a und einer zweiten, unteren Seite 2b. Ein Hülsenglied 3 des Flanschteils 1 ist über eine durchgängig umlaufende Schweißnaht 4 mit dem Ringflansch auf der zweiten, unteren Seite 2b verbunden.

Das Flanschteil 1 wird vorliegend als Kopfflansch eines Turms einer Windkraftanlage 6 eingesetzt. Dabei wird ein rohrförmiger Abschnitts 5 des Turms mit einem endständigen Rand 3a des Hülsenglieds 3 mittels einer Schweißnaht 11 durchgängig umlaufend verschweißt.

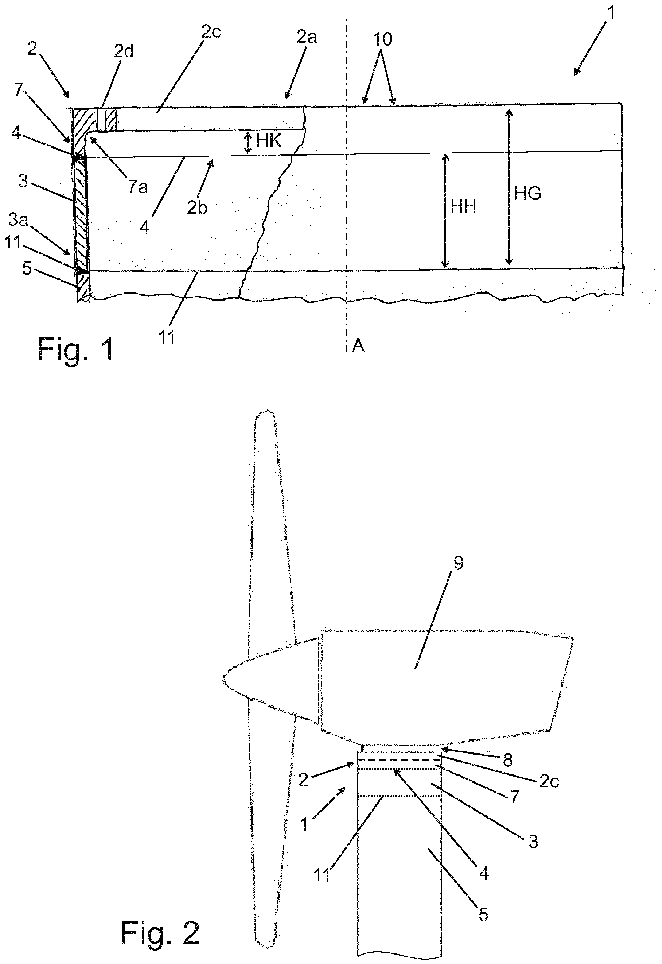

Fig. 1 zeigt das Flanschteil 1, das an sich ein eigenständiges und separat transportierbares Bauteil ist, in einem bereits mit dem röhrförmigen Abschnitt 5 verschweißten Zustand. Der Abschnitt 5 gehört nicht zu dem Flanschteil 1. Ein linker Teil der Darstellung in Fig. 1 zeigt dabei eine Schnittansicht und ein rechter Teil der Darstellung zeigt eine Draufsicht. auf das Flanschteil, wobei Schweißnähte jeweils als Linien gezeigt sind.

Der Ringflansch 2 hat einen Kragen 7, der als kurzer, hohlzylindrischer Abschnitt in Richtung der zweiten Seite 2b über einen ringförmigen Teil 2c des Ringflansches 2 vorragt. Die Verschweißung des Hülsenglieds 3 mit dem Ringflansch 2 erfolgt an einem Rand des Kragens 7. Das Hülsenglied 3 grenzt dabei stoßbündig an dem Kragen 7 an.

Der Kragen hat einen verdickten Übergangsbereich 7a zu dem ringförmigen Teil 2c, so dass der Ringflansch am Ansatz des Kragens besonders bruchfest ist. Der verdickte Übergangsbereich 7a ist als Auskehlung von definiertem Krümmungsradius ausgebildet.

In dem ringförmigen Teil 2c des Ringflansches 2 sind Ausnehmungen 2d in Form von parallel zu der Achse A verlaufenden Bohrungen vorgesehen. Mittels Schrauben (nicht dargestellt) kann das Flanschteil 1 dann an eine auf der ersten Seite 2a angrenzende Struktur 8 angebunden werden. Vorliegend ist diese Struktur 8 eine Scheibe, die eine Gondel 9 mit Generator und Propeller der Windkraftanlage trägt. Die Gondel 9 ist über die Scheibe 8 gegenüber dem Turm verdrehbar bzw. in Windrichtung orientierbar. Entsprechend bestehen hohe Anforderungen an die Maßhaltigkeit einer an die Struktur 8 angrenzenden Oberfläche 10 auf der ersten Seite 2a des Flanschteils 1. Entsprechend ist die Oberfläche 10 vorliegend mittels spanender und/oder schleifender Bearbeitung definiert ausgebildet.

Eine axiale Höhe HH des Hülsenglieds 3 entspricht vorliegend rund dem Fünffachen einer axialen Höhe HK des Kragens 7. Die axiale Gesamthöhe HG des Flanschteils 1 beträgt vorliegend weniger als ein Drittel eines Außendurchmessers D des Flanschteils 1. Der Außendurchmesser D beträgt typisch mehrere Meter.

Das Flanschteil 1 wird vorliegend wie folgt hergestellt:
Zunächst wird der Ringflansch 2 hergestellt, indem ein Profilteil mit rechteckigem Querschnitt zu einem kreisförmigen Ring gebogen wird. Die Enden werden stoßbündig verschweißt. Die axiale Höhe dieses Rings entspricht der Gesamthöhe HG des Flanschteils 1 abzüglich der Höhe HH des Hülsenglieds 3.

Nachfolgend werden aus dem Kreisring durch spanend abtragende Bearbeitung der Kragen 7 und die Ausnehmungen 2d ausgeformt, wodurch der Ringflansch 2 ausgebildet ist.

Nachfolgend wird das Hülsenglied 3 stoßbündig an den Kragen 7 angeschweißt. Das Hülsenglied kann in Umfangsrichtung nahtfrei ausgebildet sein, zum Beispiel als Abschnitt eines nahtfrei gewalzten Stahlrohrs. Es kann sich aber auch um ein hülsenförmig gebogenes Blechteil mit in axialer Richtung verlaufender Längsnaht handeln.

Nach dem Anschweißen des Hülsenglieds 3 liegt das gesamte Flanschteil 1 vor. Dieses wird dann in einen Ofen verbracht und bei definierter Temperatur über einen vorgegebenen Zeitraum spannungsarm geglüht.

Nach dem Abkühlen des spannungsarm geglühten Flanschteils wird zumindest die Oberfläche 10 auf der ersten Seite 2a des Ringflansches 2 maßgenau bearbeitet, zum Beispiel durch Schleifen und/oder spanenden Abtrag (Fräsen, Drehen etc.).

Dieses Flanschteil 1 wird mit dem rohrförmigen Abschnitt 5 des Turms der Windkraftanlage verschweißt, wonach die Scheibe 8 der Gondel 9 aufmontiert wird. Eine Nachbearbeitung der Oberfläche 10 erfolgt nach dem Anschweißen und vor dem Anbringen der Struktur 8 nicht mehr.

Das Verschweißen von Flanschteil 1 und rohrförmigem Abschnitt 8 kann vor oder nach einem Transport der Teile der Windkraftanlage zu einem Aufstellort erfolgen. Bevorzugt erfolgt das Anschweißen im Zuge einer Turmfertigung oder auch einer Fundamentfertigung.

## Patentansprüche

1. Flanschteil (1) für einen Turm einer Windkraftanlage, umfassend einen um eine Achse (A) orientierten Ringflansch (2),
eine Mehrzahl von an dem Ringflansch (2) angeordneten Ausnehmungen (2d) zur Festlegung einer Struktur (8), die auf einer ersten Seite (2a) des Ringflansches (2) an diesen angrenzt, und
ein um die Achse (A) orientiertes Hülsenglied (3), das auf einer zweiten Seite (2b) des Ringflansches (2) einstückig an diesen angrenzt,
wobei ein endständiger Rand (3a) des Hülsenglieds (3) zur Verschweißung mit einem rohrförmigen Abschnitt (5) des Turms ausgebildet ist,
wobei das Hülsenglied (3) über eine Schweißnaht (4) stoffschlüssig mit dem Ringflansch (2) verbunden ist, wobei das Flanschteil als ein eigenständiges und separat transportierbares Bauteil ausgebildet ist,
**dadurch gekennzeichnet,**
**dass** der Ringflansch (2) an der zweiten Seite (2b) einen umlaufenden Kragen (7) aufweist, wobei das Hülsenglied (3) in Richtung der Achse (A) nach dem Kragen (7) angeordnet und mit dem Kragen (7) verschweißt ist.

2. Flanschteil nach Anspruch 1, **dadurch gekennzeichnet, dass** das Flanschteil (1) nach einem Verschweißen des Hülsenglieds (3) mit dem Ringflansch (2) eine Temperaturbehandlung erfährt.

3. Flanschteil nach einem der vorhergehenden Ansprüche, **dadurch gekennzeichnet, dass** der Ringflansch (2) und der Kragen (7) nahtfrei einstückig ausgebildet sind.

4. Flanschteil nach Anspruch 3, **dadurch gekennzeichnet, dass** der Kragen (7) durch formgebende, insbesondere abtragende Bearbeitung aus dem Ringflansch (2) ausgebildet ist.

5. Flanschteil nach Anspruch 3, **dadurch gekennzeichnet, dass** der Ringflansch (2) als ringförmig gebogenes Profil ausgebildet ist, wobei der Kragen (7) vor einem Biegevorgang an dem Profil ausgebildet ist.

6. Flanschteil nach einem der vorhergehenden Ansprüche, **dadurch gekennzeichnet, dass** eine axiale Höhe (HH) des Hülsenglieds (3) größer ist als eine axiale Höhe (HK) des Kragens (7).

7. Flanschteil nach einem der vorhergehenden Ansprüche, **dadurch gekennzeichnet, dass** eine Höhe (HH) des Hülsenglieds (3) in axialer Richtung nicht größer ist als ein Außendurchmesser (D) des Ringflansches (2).

8. Flanschteil nach einem der vorhergehenden Ansprüche, **dadurch gekennzeichnet, dass** der Ringflansch (2) auf der ersten Seite eine insbesondere spanend bearbeitete Oberfläche (10) aufweist.

9. Flanschteil nach einem der vorhergehenden Ansprüche, **dadurch gekennzeichnet, dass** der Ringflansch (2) als ringförmig gebogenes und an einer Nahtstelle stoßbündig verschweißtes Profilteil ausgebildet ist.

10. Flanschteil nach einem der Ansprüche 1 bis 8, **dadurch gekennzeichnet, dass** der Ringflansch (2) als in Umfangsrichtung nahtfreies Bauteil ausgebildet ist.

11. Verfahren zur Herstellung eines Flanschteils (1) für einen Turm einer Windkraftanlage nach einem der vorhergehenden Ansprüche, umfassend die Schritte:
a. Bereitstellen des Ringflansches (2);
b. Anschweißen des Hülsenglieds (3) an den Ringflansch (2),
wobei das Hülsenglied (3) den endständigen Rand (3a) zur Verschweißung mit dem rohrförmigen Abschnitt (5) des Turms aufweist.

12. Verfahren nach Anspruch 11, **dadurch gekennzeichnet, dass** nach Schritt b. eine Temperaturbehandlung des Flanschteils (1) erfolgt.

13. Verfahren nach einem der Ansprüche 11 oder 12, **dadurch gekennzeichnet, dass** nach Schritt b. eine insbesondere spanende Bearbeitung einer Oberfläche des Ringflansches (2) erfolgt.

14. Verfahren nach einem der vorhergehenden Ansprüche, **gekennzeichnet durch** den Schritt des Anschweißens des Flanschteils (1) an den rohrförmigen Abschnitt (5) des Turms, wobei nach dem Anschweißen keine Nachbearbeitung des Ringflansches (2) mehr erfolgt.

15. Turm für eine Windkraftanlage, umfassend ein Flanschteil nach einem der Ansprüche 1 bis 10, insbesondere als Kopfflansch oder als Basisflansch.

## Claims

1. Flange member (1) for the tower of a wind turbine, comprising a circular flange (2) being oriented about an Axis (A),
a plurality of recesses (2d) which are arranged at the circular flange (2) for the fixation of a structure (8), the structure (8) adjoining to a first side (2a) of the circular flange (2), and
a bushing member (3) being oriented about the Axis (A), the bushing member (3) integrally adjoining a second side (2b) of the circular flange (2),
a terminal rim (3a) of the bushing member (3) being provided for the purpose of welding to a tubular section (5) of the tower,
the bushing member (3) being materially connected to the circular flange (2) by means of a weld (4),
**characterized in that**
the circular flange (2) is having a circumferential collar (7) at the second side (2b), the bushing member (3) being arranged after the collar (7) in the direction of the axis (A) and being welded to the collar (7).

2. Flange member according to claim 1, **characterized in that** the flange member, after a welding of the bushing member (3) with the circular flange (2), is being thermally treated.

3. Flange member according to one of the preceding claims, **characterized in that** the circular flange (2) and the collar (7) are formed seamlessly integrally.

4. Flange member according to claim 3, **characterized in that** the collar (7) is processed from the circular flange (2) by shape forming processing, in particular by material removing processing.

5. Flange member according to claim 3, **characterized in that** the circular flange (2) is provided as a profile being bent into circular shape, wherein the collar (7) has been provided at the profile prior to a bending process.

6. Flange member according to one of the preceding claims, **characterized in that** an axial height (HH) of the bushing member (3) is greater than an axial height (HK) of the collar (7).

7. Flange member according to one of the preceding claims, **characterized in that** an axial height (HH) of the bushing member (3), measured in axial direction, is not greater than an outer diameter (D) of the circular flange (2).

8. Flange member according to one of the preceding claims, **characterized in that** the circular flange (2) has a processed surface (10) on the first side, the surface (10) in particular being processed by means of cutting.

9. Flange member according to one of the preceding claims, **characterized in that** the circular flange (2) is provided as a circularly bent profile member, the profile member being welded butt-jointed at a junction.

10. Flange member according to one of claim 1 to 8, **characterized in that** the circular flange (2) is provided as a circumferentially seamless member.

11. Process for the manufacturing of a flange member (1) for the tower of a wind turbine according to one of the preceding claims, comprising the steps:
a. providing the circular flange (2);
b. welding of the bushing member (3) to the circular flange (2), the bushing member (3) providing the terminal rim (3a) for the welding with the tubular section (5) of the tower.

12. Process according to claim 11, **characterized in that** a thermal treatment of the flange member (1) is provided after step b.

13. Process according to claim 11 or 12, **characterized in that** a processing of a surface of the circular flange (2), in particular by means of cutting, is provided after step b.

14. Process according to one of the preceding claims, **characterized by** the step of welding the flange member (1) to the tubular section (5) of the tower, wherein no further treatment of the circular flange (2) is provided after the welding.

15. Tower for a wind turbine, comprising a flange member according to one of claims 1 to 10, in particular in the form of a head flange or in the form of a base flange.

## Revendications

1. Pièce de bride (1) pour une tour d'une installation éolienne, comprenant une bride annulaire (2) orientée autour d'un axe (A),
une pluralité de creux (2d) agencés sur la bride annulaire (2) pour la fixation d'une structure (8) qui aboutit contre la bride annulaire (2) sur un premier côté (2a), et
un membre de fourreau (3) orienté autour de l'axe (A), le membre de fourreau (3) aboutissant d'une seule pièce avec la bride annulaire (2) sur un deuxième côté (2b), dans laquelle un bord d'extrémité (3a) du membre de fourreau (3) est formé pour le soudage avec une partie tubulaire (5) de la tour,
dans laquelle le membre de fourreau (3) est raccordé par accouplement de matière avec la bride annulaire (2) via un joint de soudure (4), dans laquelle la pièce de bride est formée en une pièce indépendante et transportable séparément,
**caractérisée en ce que**
la bride annulaire (2) comprend une collerette (7) circonférentielle au deuxième côté (2b), dans laquelle le membre de fourreau (3) est agencé après la collerette (7) en direction de l'axe (A) et est soudé avec la collerette (7).

2. Pièce de bride selon la revendication 1, **caractérisée en ce que** la pièce de bride (1) subit un traitement thermique après le soudage du membre de fourreau (3) avec la bride annulaire (2).

3. Pièce de bride selon l'une des revendications précédentes, **caractérisée en ce que** la bride annulaire (2) et la collerette (7) sont formées d'une seule pièce sans joint.

4. Pièce de bride selon la revendication 3, **caractérisée en ce que** la collerette (7) est usinée à partir de la bride annulaire (2), en particulier par enlèvement de matière.

5. Pièce de bride selon la revendication 3, **caractérisée en ce que** la bride annulaire (2) est formée en un profil incurvé circulairement, dans lequel la collerette (7) est formée audit profil avant une opération d'incurvation

6. Pièce de bride selon l'une des revendications précédentes, **caractérisée en ce qu'**une hauteur axiale (HH) du membre de fourreau (3) est plus grande qu'une hauteur axiale (HK) de la collerette (7).

7. Pièce de bride selon l'une des revendications précédentes, **caractérisée en ce qu'**une hauteur (HH) du membre de fourreau (3) dans la direction axiale n'est pas plus grande que le diamètre extérieur (D) de la bride annulaire (2).

8. Pièce de bride selon l'une des revendications précédentes, **caractérisée en ce que** la bride annulaire (2) comprend sur un premier côté une surface (10) usinée, en particulier par enlèvement de matière.

9. Pièce de bride selon l'une des revendications précédentes, **caractérisée en ce que** la bride annulaire (2) est formée en une pièce de profil incurvée circulairement et soudé de manière affleurant à une jointure.

10. Pièce de bride selon l'une des revendications 1 à 8, **caractérisée en ce que** la bride annulaire (2) est formée en une pièce sans jointure dans la direction circonférentielle.

11. Procédé pour la fabrication d'une pièce de bride (1) pour une tour d'une installation éolienne selon l'une des revendications précédentes, comprenant les étapes de :
a. fourniture de la bride annulaire (2),
b. soudage du membre de fourreau (3) à la bride annulaire (2), dans lequel le membre de fourreau (3) comprend le bord d'extrémité (3a) pour le soudage avec la partie tubulaire (5) de la tour.

12. Procédé selon la revendication 11, **caractérisé en ce qu'**après l'étape b. s'effectue un traitement thermique de la pièce de bride (1).

13. Procédé selon l'une des revendications 11 ou 12, **caractérisé en ce qu'**après l'étape b. s'effectue un usinage, en particulier par enlèvement de matière, d'une surface de la bride annulaire (2).

14. Procédé selon l'une des revendications précédentes, **caractérisé par** l'étape de soudage de la pièce de bride (1) à la partie tubulaire (5) de la tour, dans lequel aucun post-usinage de la bride annulaire (2) ne s'effectue après le soudage.

15. Tour pour une installation éolienne comprenant une pièce de bride selon l'une des revendications 1 à 10, en particulier en tant que bride de tête ou bride de base.
